# EUROPÄISCHE PATENTSCHRIFT

(11) **EP 0 436 060 B1**
(45) Veröffentlichungstag und Bekanntmachung des Hinweises auf die Patenterteilung: **22.12.1993**
(21) Anmeldenummer: 90100216.2
(22) Anmeldetag: 05.01.1990
(51) Int. Cl.: F16L 55/165

(54) **Verfahren zur Auskleidung von Hohlräumen, insbesondere zur Sanierung von beschädigten Kanälen und Rohrleitungen**
Method of relining of cavities, especially for the renovation of damaged ducts and pipelines
Procédé de gainage d'enceintes, notamment pour la restauration des conduites endommagées

(43) Veröffentlichungstag der Anmeldung: 10.07.1991
(73) Patentinhaber: Miljoevern-Umwelt-Technik Ingenieurgesellschaft mbH, 45525 Hattingen (DE); Schade, Horst, Dipl.-Ing., 45525 Hattingen (DE)
(72) Erfinder: Schade, Horst, D-4320 Hattingen (DE)
(74) Vertreter: Finkener und Ernesti Patentanwälte

(56) Entgegenhaltungen:
- WO-A-88/00314
- DE-C- 3 801 824
- GB-A- 2 003 576
- GB-A- 2 041 147
- GB-A- 2 093 943
- GB-A- 2 188 695

## Beschreibung

Die Erfindung betrifft ein Verfahren zur Auskleidung von Hohlräumen, insbesondere zur Sanierung von Kanälen und Rohrleitungen durch Auskleiden mit Kunststoff, bei dem in den auszukleidenden Hohlraum ein rohrförmiger Hohlkörper aus Kunststoff eingeführt wird, dessen Wandung entlang einer Längsachse unterbrochen ist, wobei sich die an die Unterbrechung angrenzenden Wandabschnitte während der Hohlkörper in den Hohlraum eingeführt wird überlappen, so daß der Hohlkörper einen kleineren Durchmesser hat als der auszukleidende Hohlraum und die Überlappung nach dem Einführen beseitigt wird, um die Wandung des Hohlkörpers an den Hohlraum anzulegen.

Zur Sanierung beschädigter Rohrleitungen ist es bekannt, zunächst einen definierten Ringraum mit Hilfe einer wiederverwendbaren und mit Abstandshaltern versehenen Schlauchschalung, die mit Wasser oder Luft gefüllt wird zu erzeugen und diesen Hohlraum anschließend mit Zementmörtel auszupressen. Bei einem anderen bekannten Beschichtungsverfahren wird Zementmörtel zwischen einem Preßkolben und einem Verdrängungskörper eingebracht und beim Durchziehen des Verdrängungskörpers durch die Rohrleitung der Mörtel an die Rohrwand angepreßt. Es gehört ferner zum Stand der Technik, einen durchgehenden Kunststoffrohrstrang oder Einzelrohre in die zu sanierende Leitung einzubringen und den verbleibenden Hohlraum zu verfüllen. Beim sogenannten Wickelrohr-Relining wird ein örtlich aus PVC-Profilstreifen hergestelltes Wickelrohr mit kreisförmigem Querschnitt in die zu sanierende Haltung eingeschoben. Unter der Bezeichnung Schlauch-Relining ist ein Verfahren bekanntgeworden, bei dem ein mit Kunstharz getränkter vorkonfektionierter Filzschlauch in den zu sanierenden Hohlraum eingebracht und durch Aufbringen eines Innendruckes an die Rohrinnenwand angepreßt wird. Dabei erfolgt die Erhärtung durch Wärmezufuhr. Zur Teil- oder Vollauskleidung begehbarer Kanäle und gegebenenfalls der Ortsentwässerung dienender Anlagen ist es bekannt, einzelne selbsttragende oder nicht selbsttragende Auskleidungselemente vor Ort zu montieren. (Vgl. Stein, Niederehe "Instandhaltung von Kanalisationen", Berlin: Ernst, Verlag für Architektur und techn. Wiss., 1987).

Bei dem eingangs erwähnten zum Stande der Technik gehörenden Verfahren wird ein rohrförmiger Hohlkörper aus biegsamem elastischen Material, vorzugsweise ein schneckenförmig gewickeltes Rohr, dessen Rippen miteinander verbunden sind in Längsrichtung aufgeschnitten und elastisch durch Überlappen der an die Schnittkante angrenzenden Bereiche zu einem rohrförmigen Körper verformt, dessen Durchmesser kleiner ist als der des auszukleidenden Hohlraumes. In diesem Zustand wird der rohrförmige Körper durch Bänder oder dergleichen zusammengehalten, die nach dem Einbringen des Rohres in den Hohlraum durchgetrennt werden, so daß sich das Rohr infolge seiner Elastizität gegen die Rohrwandung anlegt. Das Verfahren ist nur für begehbare Hohlräume geeignet, da nur jeweils verhältnismäßig kurze Stücke eingebracht werden können, die an den Stoßkanten mit den vorher eingebrachten Rohrlängen verbunden und gegenüber diesen abgedichtet werden müssen. Diese Methode ist aus der PCT-Anmeldung mit der Veröffentlichungsnummer WO 88/00314 bekannt.

Die Aufgabe, die der Erfindung zugrunde liegt besteht darin, ein Sanierungsverfahren so auszubilden, daß größere Rohrlängen kontinuierlich auch in eine nicht begehbare Leitung oder einen Kanal eingebracht werden können, ohne daß ein nachträgliches Verfüllen notwendig ist. Gleichzeitig soll das Einbringen der neuen Auskleidung erleichtert werden und auch in den Fällen möglich sein, in denen der Kanal nicht geradlinig verläuft.

Ausgehend von einem Verfahren der eingangs beschriebenen Art besteht die Erfindung darin, daß ein Kunststoffband aus einem thermoplastischen Material, dessen Breite etwa dem Umfang des auszukleidenden Hohlraumes entspricht, vorzugsweise unter Zufuhr von thermischer Energie kontinuierlich einer bleibenden Verformung unter Bildung eines Hohlkörpers mit sich über dessen Gesamtlänge überlappenden Kanten unterworfen wird, dessen Durchmesser wesentlich kleiner ist als der Durchmesser des auszukleidenden Hohlraumes, daß der so gebildete Hohlkörper in den auszukleidenden Hohlraum eingezogen und anschließend die Uberlappung durch Durchziehen eines Verdrängungskörpers und/oder Einführen eines Mediums, vorzugsweise bei gleichzeitiger Erwärmung, so weit aufgehoben wird, daß der Hohlkörper dicht an der Wandung des Hohlraumes zur Anlage kommt.

Die Erfindung sieht ferner vor, daß das von einer oberhalb einer Einziehgrube angeordneten Haspel abgewickelte Kunststoffband über eine Umlenkrolle einer Verformungseinrichtung zugeführt wird, in der es kontinuierlich einer bleibenden Verformung zu einem rohrförmigen Hohlkörper mit sich überlappenden Längskanten unterworfen wird und daß der so gebildete Hohlkörper mit einem an seinem vorderen Ende angebrachten Zugseil durch den zu sanierenden Kanal bis zu einer Zielgrube gezogen wird, in der das Zugseil über eine Umlenkrolle zu einer Winde geführt ist, worauf die Überlappung des rohrförmigen Hohlkörpers durch Durchziehen eines Verdrängungskörpers so weit aufgehoben wird, daß die Kunststoffplatte fest an der Wandung des zu sanierenden Hohlraumes anliegt.

Es hat sich als zweckmäßig erwiesen, die Wandung des zu sanierenden Hohlraumes vor der Einführung des verformten Kunststoffbandes einer Reinigung, vorzugsweise durch Fräsen zu unterwerfen.

Eine bevorzugte Ausführungsform der Erfindung sieht vor, daß das Kunststoffband einer bleibenden Verformung zu einem Hohlkörper mit einem vorzugsweise runden oder ovalen, der Querschnittsform der zu sanierende Rohrleitung angepaßten Qurschnitt unterworfen und anschließend unter Aufhebung der Überlappung zu einem rohrförmigen Körper mit entsprechendem Querschnitt verformt wird.

Erfindungsgemäß werden die Stoß- oder Überlappungskanten des an der Wandung des zu sanierenden Kanals anliegenden Hohlkörpers mittels eines von der Einziehgrube zur Zielgrube geführten Schweißgerätes unter gleichzeitigem Andrücken der zu verschweißenden Randabschnitte an die Innenwand des Hohlraumes verschweißt. Dabei werden die zu verschweißende Naht bzw. die Überlappungsstellen vorzugsweise in den oberen Bereich des Hohlkörpers gelegt.

Zur Herstellung von Seitenanschlüssen, insbesondere Hausanschlüssen, an den sanierten Kanal sieht die Erfindung vor, von der Seite her mittels einer Rohrfräsmaschine ein Loch mit dem Durchmesser des zu sanierenden Seitenkanals in die Wandung des Hauptkanals zu bohren und durch dieses Loch ein Kunststoffrohr bis in den Hauptkanal einzuziehen. Je nach den örtlichen Verhältnissen kann ein Kunststoffrohr eingezogen werden, dessen Durchmesser dem des Seitenkanals entspricht. Es ist selbstverständlich auch möglich, zunächst ein erfindungsgemäß verformtes Kunststoffrohr mit kleinerem Durchmesser einzuziehen und dieses anschließend aufzuweiten. Das in den sanierten Hauptkanal überstehende Ende des Seitenrohres wird erfindungsgemäß mittels einer durch den Hauptkanal gezogenen Fräse abgefräst und das Ende des Seitenrohres längs des Umfanges des in dem Hauptkanal angebrachten Loches mit diesem dicht verschweißt.

Die Erfindung sieht auch vor, in den aufgeweiteten, dicht der Wandung des zu sanierenden Hohlraumes anliegenden Hohlkörper Spreizringe aus Stahl einzulegen, die mit dem gleichen oder einem diesem ähnlichen thermoplastischen Werkstoff verkleidet sind, aus denen der Hohlkörper besteht und die Spreizringe durch Verschweißen mit der Innenwandung der Hohlkörper zu fixieren. Bei einer bevorzugten Ausführungsform der Erfindung haben die Spreizringe eine solche Länge, daß am Boden des Hohlkörpers ein Abschnitt freibleibt, der einer einem Winkel von etwa 45 bis 160° entsprechenden Bogenlänge entspricht. Die strömungsaufwärts liegenden Kanten der Spreizringe werden vorzugsweise abgeflacht, um ein Ansetzen von Feststoffen zu verhindern.

Zur Erhöhung der Festigkeit gegen von außen auftretende Drucke sieht die Erfindung vor, den Hohlkörper durch Annageln oder Anschrauben mit der beschädigten Rohrleitung fest zu verbinden. Zur Erhöhung der Festigkeit hat es sich ferner als zweckmäßig erwiesen, in das Kunststoffband, aus dem der rohrförmige Körper geformt wird, eine Stahlspirale oder eine Glasfaserverstärkung einzuarbeiten. Die Anbringung des Hohlkörpers an dem beschädigten Kanal kann auch in der Weise erfolgen, daß die Oberfläche der Wandung des beschädigten Kanals zunächst aufgerauht und mit einem Kleber versehen wird, der durch Aufbringen von Druck und/oder bei einer bestimmten Mindesttemperatur seine Klebewirkung entfaltet, wobei der einzubringende Hohlkörper ebenfalls außen aufgerauht und mit einer Haftfaser beschichtet wird, die unter den gleichen Druck- bzw. Temperaturbedingungen haftet.

Zur Aufnahme und zum Ausgleich von Längsdehnungen sieht die Erfindung vor, in das Kunststoffband elastische Streifen einzuarbeiten, wenn eine Fixierung des Kunststoffbandes an der Wandung des Kanals bzw. der Rohrleitung durch Kleben, Verschrauben oder Nageln nicht erfolgen soll. Erfindungsgemäß ist es ferner möglich, den Hohlkörper im direkten Nachlauf einer insbesondere ferngesteuerten Vortriebsmaschine in den gebildeten Hohlraum einzuziehen.

Das erfindungsgemäße Verfahren hat sich als äußerst zweckmäßig erwiesen. Die bleibende Verformung des Ausgangsbandes zu einem Hohlkörper, dessen Durchmesser kleiner ist als der der zu sanierenden Leitung kann mit einfachen bekannten Mitteln erfolgen. Das Einziehen des Hohlkörpers ist selbst dann problemlos, wenn längere Kanäle saniert werden müssen und wenn diese nicht geradlinig verlaufen. Auch der nachträgliche Anschluß von Seitenkanälen ist in der gleichen Weise möglich. Ein nachträgliches Verfüllen oder Ausgießen von Hohlräumen ist nicht erforderlich.

Auf der Zeichnung ist ein Ausführungsbeispiel der Erfindung dargestellt. Es zeigen:
Fig. 1 einen Längsschnitt durch einen zu sanierenden unterirdisch verlaufenden Kanal,
Fig. 2a einen Schnitt durch den Kanal gemäß der Linie A-A während des Einziehens des rohrförmigen Hohlkörpers und
Fig. 2b einen der Fig. 2a entsprechenden Schnitt nach dem Schweißen,
Fig. 3a einen Spreizring in gespanntem Zustand und
Fig. 3b einen Spreizring im entspannten Zustand.

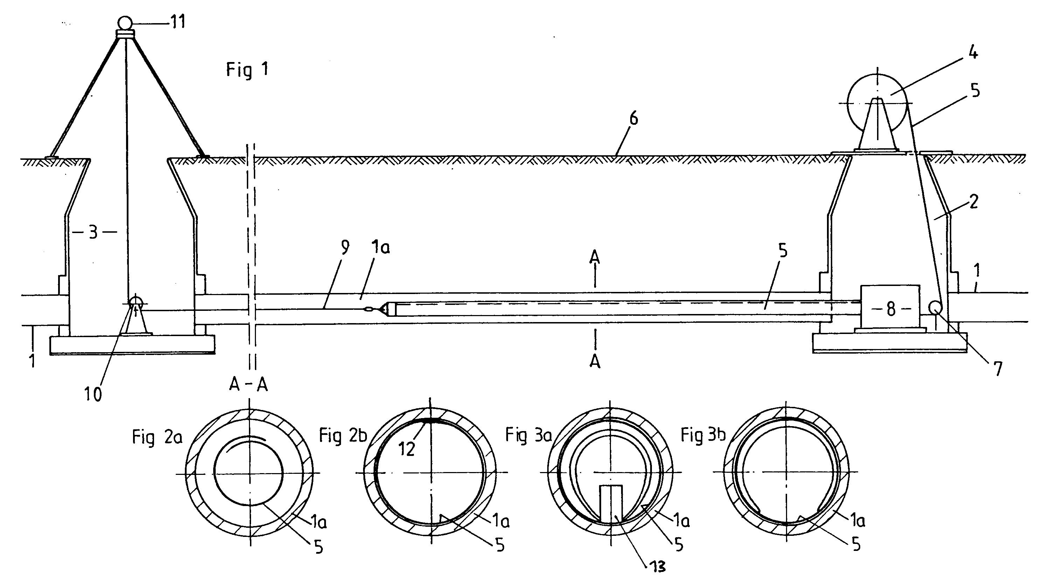

Mit (1a) ist der zu sanierende Abschnitt eines Kanalrohres (1), beispielsweise eines Abwasserrohres bezeichnet. An den beiden Enden des Abschnittes (1a) wird das Kanalrohr im Bereich einer Einziehgrube (2) und einer Zielgrube (3) unterbrochen. Oberhalb der Einziehgrube (2) befindet sich in Höhe des Niveaus (6) des Bodens eine Haspel (4) mit einem darauf aufgewickelten Band (5) aus einem thermoplastischen Kunststoff. Die Breite des Bandes entspricht mindestens dem inneren Umfang des zu sanierenden Rohres, während seine Länge mindestens der des Abschnittes (1a) des Kanalrohres entspricht. Das Band wird kontinuierlich von der Haspel abgewickelt und über eine Umlenkrolle (7) einer im Prinzip bekannten Verformungseinrichtung (8) zugeführt, in der es bleibend zu einem Hohlkörper mit kreisförmigem Querschnitt verformt wird, dessen Längskanten sich überlappen und dessen Durchmesser kleiner ist als der des zu sanierenden Kanalrohres. In diesem Zustand wird der aus dem Band (5) geformte Hohlkörper in das Kanalrohr eingeführt und durch diesen hindurchgezogen (Fig. 2a), so daß Beschädigungen des Hohlkörpers während des Verlegens nicht auftreten können. Brüche, Verstellungen und Deformationen des zu sanierenden Rohres bilden weder beim Einziehen des Hohlkörpers noch beim späteren Betrieb des sanierten Kanals ein Hindernis.

Das Durchziehen erfolgt mittels eines am vorderen Ende des Hohlkörpers angebrachten Zugseiles (9), das über eine in der Zielgrube angeordnete Umlenkrolle (10) aus dem Bodenbereich nach außen zu einer Zugseilwinde (11) geführt ist. Nachdem der Hohlkörper in den zu sanierenden Abschnitt (1a) des Kanalrohres eingelegt ist, wird von der Startgrube aus ein nicht dargestellter Verdrängungskörper durch den Hohlkörper gezogen. Dies erfolgt zweckmäßigerweise unter gleichzeitiger Zufuhr von Wärme. Der Verdrängungskörper hat die Form des Innenraumes des zu sanierenden Kanalrohres und einen Querschnitt, der etwas kleiner ist als der des Kanalrohres, so daß der Hohlkörper unter gleichzeitiger erneuter bleibender Verformung fest gegen die Innenwandung des Kanalrohres gedrückt wird. Dabei wird die Überlappung aufgehoben, so daß die Längskanten des Kunststoffbandes aneinanderstoßen. Wie sich aus Fig. 2a ergibt, wird der Hohlkörper so in das Kanalrohr eingeführt, daß die Überlappung und damit die Stoßkanten des Hohlkörpers im oberen Bereich des Kanalrohres zu liegen kommen. Anschließend wird die Stoßnaht mit Hilfe eines Schweißgerätes, das durch den Hohlkörper gezogen wird verschweißt. Fig. 2b zeigt einen Schnitt durch die sanierte Leitung mit der Schweißnaht (12). Die Breite des Bandes (5) kann auch so bemessen sein, daß sich seine Längskanten im Bereich der Nahtstelle im fertigen Zustand geringfügig überlappen.

In vielen Fällen können bereits vorhandene Schächte als Einzieh- und/oder Zielgrube dienen. Zweckmäßigerweise wird das Schweißgerät als Nachläufer des Verdrängungskörpers zusammen mit diesen durch den Hohlkörper gezogen, so daß die Naht unmittelbar nach der Ausdehnung und dem Andrücken des Hohlkörpers an die Wandung geschweißt wird.

Auf den Fig. 3a und 3b ist eine bevorzugte Ausführungsform der Erfindung dargestellt, bei der in die fertig verlegte sanierte Leitung Spreizringe aus Stahl oder einem glasfaserverstärkten Kunststoff eingelegt werden, die mit einer Beschichtung aus dem gleichen thermoplastischen Kunststoff versehen sind, aus denen das Band (5) besteht. Die aus elastischem Material bestehenden Ringe werden in der in Fig. 3a dargestellten Weise in zusammengedrücktem Zustand in den Hohlkörper eingebracht und drücken sich infolge ihrer Elastizität im entspannten Zustand fest gegen die Innenwandung des Hohlkörpers, der auf diese Weise fixiert und verstärkt wird. Zweckmäßigerweise werden Ringe verwendet, die im unteren Bereich des Hohlkörpers offen sind und eine einem Winkel von etwa 45 bis 160° entsprechende Bogenlänge freilassen. Mit (13) ist eine Vorrichtung zum Einsetzen der Spreizringe in die verlegte Leitung bezeichnet, die die Ringe in zusammengedrücktem Zustand hält und beim Durchfahren der Leitung an der vorgesehenen Stelle freigibt.

## Patentansprüche

1. Verfahren zur Auskleidung, insbesondere zur Sanierung von Kanälen und Rohrleitungen durch Auskleiden mit Kunststoff, bei dem in den auszukleidenden Hohlraum ein rohrförmiger Hohlkörper aus Kunststoff eingeführt wird, dessen Wandung entlang einer Längsachse unterbrochen ist, wobei sich die an die Unterbrechung angrenzenden Wandabschnitte während der Hohlkörper in den Hohlraum eingeführt wird überlappen, so daß der Hohlkörper einen kleineren Durchmesser hat als der auszukleidende Hohlraum und die Uberlappung nach dem Einführen beseitigt wird, um die Wandung des Hohlkörpers an den Hohlraum anzulegen, dadurch gekennzeichnet, daß ein Kunststoffband aus einem thermoplastischen Material, dessen Breite etwa dem Umfang des auszukleidenden Hohlraumes entspricht, vorzugsweise unter Zufuhr von thermischer Energie kontinuierlich einer bleibenden Verformung unter Bildung eines Hohlkörpers mit sich über dessen Gesamtlänge überlappenden Kanten unterworfen wird, dessen Durchmesser wesentlich kleiner ist als der Durchmesser des auszukleidenden Hohlraumes, daß der so gebildete Hohlkörper in den auszukleidenden Hohlraum eingezogen und anschließend die Uberlappung durch Durchziehen eines Verdrängungskörpers und/oder Einführen eines Mediums, vorzugsweise bei gleichzeitiger Erwärmung, so weit aufgehoben wird, daß der Hohlkörper dicht an der Wandung des Hohlraumes zur Anlage kommt.

2. Verfahren nach Anspruch 1, dadurch gekennzeichnet, daß das von einer oberhalb einer Einziehgrube angeordneten Haspel abgewickelte Kunststoffband über eine Umlenkrolle einer Verformungseinrichtung zugeführt wird, in der es kontinuierlich einer bleibenden Verformung zu einem rohrförmigen Hohlkörper mit sich überlappenden Längskanten unterworfen wird und daß der so gebildete Hohlkörper mit einem an seinem vorderen Ende angebrachten Zugseil durch den auszukleidenden Kanal bis zu einer Zielgrube gezogen wird, in der das Zugseil über eine Umlenkrolle zu einer Winde geführt ist, worauf die Überlappung des rohrförmigen Hohlkörpers durch Durchziehen eines Verdrängungskörpers so weit aufgehoben wird, daß die Kunststoffplatte fest an der Wandung des auszukleidenden Hohlraumes anliegt.

3. Verfahren nach den Ansprüchen 1 und 2, dadurch gekennzeichnet, daß die Wandung des auszukleidenden Hohlraumes vor der Einführung des verformten Kunststoffbandes einer Reinigung, vorzugsweise durch Fräsen unterworfen wird.

4. Verfahren nach den Ansprüchen 1 bis 3, dadurch gekennzeichnet, daß das Kunststoffband einer bleibenden Verformung zu einem Hohlkörper mit einem vorzugsweise runden oder ovalen, der Querschnittsform der auszukleidenden Rohrleitung angepaßten Querschnitt unterworfen und unter Aufhebung der Überlappung zu einem rohrförmigen Körper mit entsprechendem Querschnitt verformt wird.

5. Verfahren nach den Ansprüchen 1 bis 4, dadurch gekennzeichnet, daß die Stoß- oder Überlappungskanten des an der Wandung des auszukleidenden Kanals anliegenden Hohlkörpers mittels eines von der Einziehgrube zur Zielgrube geführten Schweißgerätes unter gleichzeitigem Andrücken der zu schweißenden Randabschnitte an die Innenwand des Hohlraumes verschweißt werden.

6. Verfahren nach den Ansprüchen 1 bis 5, dadurch gekennzeichnet, daß die zu verschweißende Naht bzw. die Überlappungsstellen in den oberen Bereich des Hohlkörpers gelegt werden.

7. Verfahren nach den Ansprüchen 1 bis 6, dadurch gekennzeichnet, daß zur Herstellung von Seitenanschlüssen, insbesondere Hausanschlüssen, an den sanierten Kanal von der Seite her mittels einer rohrfräsmaschine ein Loch mit dem Durchmesser des auszukleidenden Seitenkanals gebohrt wird, durch das ein Kunststoffrohr bis in den Hauptkanal eingezogen wird.

8. Verfahren nach Anspruch 7, dadurch gekennzeichnet, daß das in den ausgekleideten Hauptkanal überstehende Ende des Seitenrohres mittels einer durch den Hauptkanal gezogenen Fräse abgefräst und das Ende des Seitenrohres mittels einer Schweißmaschine längs des Umfanges des in dem Hauptrohr angebrachten Loches mit diesem dicht verschweißt wird.

9. Verfahren nach den Ansprüchen 1 bis 8, dadurch gekennzeichnet, daß in den aufgeweiteten, dicht an der Wandung des ausgekleideten Hohlraumes anliegenden Hohlkörper Spreizringe aus Stahl eingelegt werden, die mit dem gleichen thermoplastischen Werkstoff verkleidet sind, aus denen der Hohlkörper besteht und daß die Ringe durch Verschweißen mit der Innenwandung der Hohlkörper fixiert werden.

10. Verfahren nach Anspruch 9, dadurch gekennzeichnet, daß die Spreizringe eine solche Länge haben, daß am Boden des Hohlkörpers ein Abschnitt freibleibt, der einer einem winkel von etwa 45 bis 160° entsprechenden bogenlänge entspricht.

11. Verfahren nach den Ansprüchen 9 und 10, dadurch gekennzeichnet, daß die strömungsaufwärts liegende Kante der Ringe, um ein Ansetzen von Feststoffen zu verhindern, abgeflacht ist.

12. Verfahren nach einem oder mehreren der Ansprüche 1 bis 11, dadurch gekennzeichnet, daß der Hohlkörper durch Annageln oder Anschrauben mit der beschädigten Rohrleitung fest verbunden wird.

13. Verfahren nach einem oder mehreren der Ansprüche 1 bis 12, dadurch gekennzeichnet, daß in das Kunststoffband, aus dem der rohrförmige Körper geformt wird, eine Stahlspirale oder eine Glasfaserverstärkung eingearbeitet wird.

14. Verfahren nach einem oder mehreren der Ansprüche 1 bis 13, dadurch gekennzeichnet, daß in das Kunststoffband elastische Streifen zum Ausgleich von Längsdehnungen eingearbeitet werden.

15. Verfahren nach einem oder mehreren der Ansprüche 1 bis 14, dadurch gekennzeichnet, daß die Anbringung des Hohlkörpers an dem auszukleidenden Kanal in der Weise erfolgt, daß die Oberfläche der Wandung des beschädigten Kanals zunächst aufgerauht und mit einem Kleber versehen wird, der durch Aufbringen von Druck und/oder bei einer bestimmten Mindesttemperatur seine Klebewirkung entfaltet und daß anschließend der einzubringende Hohlkörper ebenfalls außen aufgerauht und mit einer Haftfaser beschichtet wird, die unter den gleichen Druck- bzw. Temperaturbedingungen haftet.

16. Verfahren nach einem oder mehreren der Ansprüche 1 bis 14, dadurch gekennzeichnet, daß der Hohlkörper im Nachlauf einer insbesondere ferngesteuerten Vortriebsmaschine in den gebildeten Hohlraum eingezogen wird.

## Claims

1. Coating process, more especially for the restoration of ducts and pipelines by covering with plastic, in which a tubular hollow body of plastic is inserted into the hollow space which is to be coated, the wall of which hollow body is interrupted along a longitudinal axis, wherein the wall sections adjacent to the interruption overlap whilst the hollow body is inserted, so that the hollow body has a smaller diameter than the hollow space which is being coated, and the overlap is removed after insertion, in order to place the wall of the hollow body against the hollow space, characterised in that a plastic band composed of a thermoplastic material, whose width corresponds roughly to the circumference of the hollow space being coated, is continually subjected to permanent deformation, preferably by the introduction of thermal energy, a hollow body being formed which has edges overlapping its entire length and whose diameter is considerably smaller than the diameter of the hollow space which is being coated, that the hollow body so formed is drawn into the hollow space being coated, and then the overlap, by drawing through a displacement body and/or by the introduction of a medium, preferably with simultaneous heating, is removed to such an extent that the hollow body comes into abutment tightly against the wall of the hollow space.

2. Process as claimed in Claim 1, characterised in that the plastic band, which is unwound from a reel arranged above a draw-in pit, is fed over a deflection pulley to a deformation arrangement, in which it is continually subjected to permanent deformation into a tubular hollow body with overlapping longitudinal edges, and that the hollow body so formed is drawn by a draw-in wire fixed to its front end, through the duct which is being coated, to a target pit, in which the draw-in wire is led over a deflecting pulley to a winch, whereupon the overlap of the tubular hollow body is removed to such an extent by drawing through a displacement body, that the plastic plate butts firmly against the wall of the hollow space which is coated.

3. Process as claimed in Claims 1 and 2, characterised in that the wall of the hollow space which is being coated is subjected to scouring, preferably by milling, before introduction of the deformed plastic band.

4. Process as claimed in Claims 1 to 3, characterised in that the plastic band is subjected to permanent deformation into a hollow body with a preferably circular or oval cross-section which is matched to the cross-section shape of the pipeline being coated, and is deformed into a tubular body with a corresponding cross-section by removing the overlap.

5. Process as claimed in Claims 1 to 4, characterised in that the impact edges or overlapping edges of the hollow body which butts against the wall of the duct being coated are welded by means of a welding appliance which is led from the draw-in pit to the target pit, with simultaneous pressing of the edge sections which are to be welded against the inside wall of the hollow space.

6. Process as claimed in Claims 1 to 5, characterised in that the seam which is to be welded or the overlapping points are placed in the top area of the hollow body.

7. Process as claimed in Claims 1 to 6, characterised in that in order to produce lateral connections, more especially house connections, a hole with the diameter of the lateral duct being coated is bored in the restored duct from the side by means of a pipe milling machine, through which hole a plastic pipe is drawn into the main duct.

8. Process as claimed in Claim 7, characterised in that the end of the lateral pipe which projects into the coated main duct is milled off by means of a milling cutter which is drawn through the main duct, and the end of the lateral pipe is welded along the circumference of the hole arranged in the main duct tightly to the latter by means of a welding machine.

9. Process as claimed in Claims 1 to 8, characterised in that steel expanding rings are placed in the widened hollow body which butts tightly against the wall of the coated hollow space, which rings are covered with the same thermoplastic material of which the hollow body is composed, and that the rings are fixed to the inside wall of the hollow body by welding.

10. Process as claimed in Claim 9, characterised in that the expanding rings are of such a length that there remains on the floor of the hollow body a section which corresponds to an arc length corresponding to an angle of roughly 45 to 160°.

11. Process as claimed in Claims 9 and 10, characterised in that the upstream-situated edge of the rings is flattened in order to prevent the deposition of solid substances.

12. Process as claimed in one or more of the Claims 1 to 11, characterised in that the hollow body is firmly connected to the damaged pipeline by nailing or screwing.

13. Process as claimed in one or more of the Claims 1 to 12, characterised in that a steel spiral or a glass fibre reinforcement is incorporated in the plastic band from which the tubular body is formed.

14. Process as claimed in one or more of the Claims 1 to 13, characterised in that elastic strips for compensating longitudinal strains are incorporated in the plastic band.

15. Process as claimed in one or more of the Claims 1 to 14, characterised in that the fixing of the hollow body to the duct which is to be coated occurs in such a way that the surface of the wall of the damaged duct is initially roughened and provided with an adhesive which reveals its adhesive effect with the introduction of pressure and/or at a certain minimum temperature, and that the hollow body which is to be inserted is then likewise roughened on the outside and coated with an adhesive fibre which sticks under the same pressure or temperature conditions.

16. Process as claimed in one or more of the Claims 1 to 14, characterised in that the hollow body is drawn into the hollow space formed, in the wake of a heading machine which is more especially remote-controlled.

## Revendications

1. Procédé pour le gainage ou regarnissage, notamment pour la réfection ou restauration de canalisations et conduites tubulaires par gainage ou regarnissage avec une matière synthétique ou plastique, procédé dans lequel on introduit un corps creux tubulaire en matière synthétique ou plastique dans la cavité à regarnir ou à restaurer, dont la paroi est interrompue ou discontinue le long d'un axe longitudinal, les sections de paroi limitrophes de cette discontinuité venant se recouvrir ou se chevaucher tandis que l'on introduit le corps creux dans la cavité, le corps creux possédant un diamètre plus petit que la cavité à gainer ou à regarnir et la partie de recouvrement ou de chevauchement étant supprimée après l'introduction pour appliquer la paroi du corps creux sur la cavité, procédé caractérisé en ce qu'une bande synthétique en matière thermoplastique dont la largeur correspond sensiblement à la périphérie du corps creux à regarnir est, de préférence en amenant une énergie thermique en continu, soumise à une déformation permanente en constituant un corps creux avec des bords se recouvrant ou se chevauchant sur toute la longueur, dont le diamètre est sensiblement plus petit que le diamètre de la cavité à regarnir, en ce que le corps creux ainsi formé est inséré dans la cavité à regarnir et consécutivement le recouvrement est supprimé par passage d'un corps de refoulement et/ou l'introduction d'un moyen ou agent, de préférence en chauffant simultanément, pour que le corps creux vienne s'appliquer tout contre la paroi de la cavité.

2. Procédé selon la revendication 1, caractérisé en ce que la bande de matière synthétique déroulée par un dévidoir agencé au-dessus d'une fosse d'aérage est amenée par l'intermédiaire d'un galet de renvoi d'un dispositif de déformation, dispositif dans lequel elle est soumise de façon continue à une déformation permanente pour constituer un corps creux tubulaire avec les côtés longitudinaux se recouvrant et en ce que le corps creux ainsi formé est tracté par un câble de traction fixé sur l'une de ses extrémités à travers la canalisation à gainer ou regarnir jusqu'à la cible ou fosse de destination, dans laquelle le câble de traction est amené par l'intermédiaire d'un galet de renvoi jusqu'à un treuil, après quoi le recouvrement ou chevauchement du corps creux tubulaire est supprimé en faisant passer un corps de refoulement pour que la plaque de matière synthétique vient s'appliquer solidement sur la paroi de la cavité à regarnir.

3. Procédé selon les revendications 1 et 2, caractérisé en ce que la paroi de la cavité à regarnir est soumise à un nettoyage, de préférence par fraisage avant l'introduction de la bande de matière synthétique déformée.

4. Procédé selon les revendications 1 à 3, caractérisé en ce que la bande de matière synthétique est soumise à une déformation permanente pour donner un corps creux de section transversale ronde ou ovale adaptée à la forme de section transversale de la conduite à regarnir et en ce qu'elle est déformée en supprimant le recouvrement pour donner un corps tubulaire ayant une section transversale correspondante.

5. Procédé selon les revendications 1 à 4, caractérisé en ce que les bords de jonction ou de recouvrement du corps creux appliqué sur la paroi de la canalisation à regarnir sont soudés au moyen d'un appareil de soudage amené depuis la fosse d'aérage jusqu'à la fosse de destination tout en comprimant simultanément les sections de bords à souder contre la paroi interne de la cavité.

6. Procédé selon les revendications 1 à 5, caractérisé en ce que la ligne de joint à souder ou les parties de recouvrement sont appliquées dans la zone supérieure du corps creux.

7. Procédé selon les revendications 1 à 6, caractérisé en ce que pour la réalisation des branchements latéraux, notamment pour les branchements particuliers, on perce un trou du diamètre de la canalisation latérale à regarnir sur la canalisation restaurée à partir du côté au moyen d'une machine de fraisage pour tubes ou tuyaux, trou à travers lequel on insère un tube ou tuyau en matière synthétique jusque dans la canalisation principale.

8. Procédé selon la revendication 7, caractérisé en ce que l'on enlève à la fraise l'extrémité du tube latéral faisant saillie dans la canalisation principale regarnie au moyen d'une fraise introduite par la canalisation principale et en ce que l'on soude l'extrémité du tube latéral au moyen d'un appareil de soudage le long de la périphérie du trou ménagé dans le tuyau ou tube principal de façon étanche avec celui-ci.

9. Procédé selon les revendications 1 à 8, caractérisé en ce que l'on introduit dans le corps creux expansé, appliqué tout contre la paroi de la cavité à regarnir, des anneaux d'écartement qui sont revêtus de la même matière thermoplastique que celle constituant le corps creux et en ce que l'on fixe les anneaux par soudage sur la paroi interne du corps creux.

10. Procédé selon la revendication 9, caractérisé en ce que les anneaux d'écartement ont une longueur permettant de dégager sur le fond du corps creux un tronçon qui équivaut à une longueur d'arc correspondant à un angle d'environ 45 jusqu'à 160°.

11. Procédé selon les revendications 9 et 10, caractérisé en ce que le bord des anneaux situé dans le sens en remontant le courant est aplati pour empêcher le dépôt de matière solide.

12. Procédé selon une ou plusieurs des revendications 1 à 11, caractérisé en ce que le corps creux est raccordé solidement par clouage ou vissage à la conduite endommagée.

13. Procédé selon une ou plusieurs des revendications 1 à 12, caractérisé en ce que dans la bande de matière synthétique à partir de laquelle est formé le corps tubulaire est incorporée une spirale métallique ou un renforcement en fibres de verre.

14. Procédé selon une ou plusieurs des revendications 1 à 13, caractérisé en ce que dans la bande de matière synthétique sont incorporées des bandes élastiques destinées à compenser la dilatation longitudinale.

15. Procédé selon une ou plusieurs des revendications 1 à 14, caractérisé en ce que l'application du corps creux sur la canalisation à regarnir s'effectue de telle sorte que la surface de la paroi de la canalisation endommagée est d'abord rendue rugueuse et reçoit une substance adhésive qui produit son effet adhésif lors de l'application d'une pression ou compression et/ou à une température minimale déterminée et en ce que consécutivement le corps creux à appliquer est également rendu rugueux sur l'extérieur et en ce qu'il est enduit de fibres adhésives qui collent dans les mêmes conditions de pression ou compression ou de température.

16. Procédé selon une ou plusieurs des revendications 1 à 14, caractérisé en ce que l'on introduit le corps creux à la suite d'un engin d'avancement ou d'un engin tunnelier notamment télécommandé dans la cavité formée.
